# EUROPEAN PATENT APPLICATION

(11) **EP 2 757 507 A1**
(43) Date of publication of application: **23.07.2014**
(21) Application number: 12832481.1
(22) Date of filing: 30.07.2012
(51) Int. Cl.: G06Q 10/06

(54) **ACCOUNTING DATA GENERATING DEVICE, METHOD, PROGRAM, SYSTEM, SERVER DEVICE, AND RECORDING MEDIUM**

(30) Priority: 15.09.2011 JP 2011202190
(71) Applicant: Fujitsu Marketing Limited, Tokyo 112-8572 (JP)
(72) Inventor: OKABAYASHI, Isao, Tokyo 112-8572 (JP); MORIYA, Kentaro, Tokyo 112-8572 (JP)
(74) Representative: Schultes, Stephan
(86) International application number: PCT/JP2012/069372
(87) International publication number: WO 2013/038824

(57) **Abstract**

An accounting data generation apparatus (10) according to an embodiment includes a definition information storage unit (11), a business data acquisition unit (17), and an accounting data generation unit (18). The definition information storage unit (11) stores definition information for generating a plurality of pieces of accounting data corresponding respectively to a plurality of accounting standards for each kind of business data created from data of a business system. The business data acquisition unit (17) acquires the business data. The accounting data generation unit (18) reads from the definition information storage unit (11) definition information corresponding to the kind of the business data acquired by the business data acquisition unit (17), and generates a plurality of pieces of accounting data corresponding respectively to the plurality of accounting standards from the business data in accordance with the read definition information.

## Description

### [Technical Field]

Technology disclosed in the present application relates to an accounting data generation apparatus, method, program, system, server apparatus, and recording medium.

### [Background Art]

Conventionally, various financial accounting systems are used in general companies for the purpose of performing financial accounting duties efficiently. The financial accounting system generates accounting data in compliance with a predetermined accounting standard, for example, by inputting business data created from data of various business systems used in a company, and performing an accounting process based on the accounting standard with the input business data.

Moreover, in recent-years' financial accounting duties of a company, the accounting process is performed in compliance with a plurality of accounting standards. The plurality of accounting standards here indicates, for example, the Japanese standard and the IFRS (International Financial Reporting Standards) standard. For example, in the financial duties of a company, non-consolidated accounts are settled in compliance with the Japanese standard, and consolidated accounts are settled in compliance with the IFRS standard. In order to perform the accounting process in compliance with the plurality of accounting standards in this manner, accounting data in compliance with the accounting standards are generated, respectively.

### [Citation List]

### [Patent Citation]

Patent Document 1: Japanese Laid-open Patent Publication No. 2007-12018
Patent Document 2: Japanese Patent No. 4226171

### [Summary of Invention]

### [Technical Problem]

However, the above known financial accounting system prepares business data according to the accounting standard to perform the accounting process in compliance with the plurality of accounting standards, and it is difficult to generate accounting data in compliance with the plurality of accounting standards.

The technology disclosed in the present application has been made considering the above, and an object thereof is to provide an accounting data generation apparatus, method, program, system, server apparatus, and recording medium that can generate accounting data easily in compliance with a plurality of accounting standards.

### [Solution to Problem]

For solving the problem described above and achieving the object, an accounting data generation apparatus disclosed in the present application includes a definition information storage unit, a business data acquisition unit, and an accounting data generation unit. The definition information storage unit stores definition information for generating a plurality of pieces of accounting data corresponding respectively to a plurality of accounting standards for each kind of business data created from data of a business system. The business data acquisition unit acquires the business data. The accounting data generation unit reads from the definition information storage unit definition information corresponding to a kind of the business data acquired by the business data acquisition unit, and generates a plurality of pieces of accounting data corresponding respectively to the plurality of accounting standards from the business data in accordance with the read definition information.

### [Advantageous Effects of Invention]

An accounting data generation apparatus disclosed in the present application takes effect that makes it possible to generate accounting data easily in compliance with a plurality of accounting standards.

### [Brief Description of Drawings]

FIG. 1 is a diagram illustrating an outline of an accounting data generation apparatus according to the embodiment.
FIG. 2 is a diagram illustrating a problem in a known financial accounting system.
FIG. 3 is a diagram illustrating a configuration of the accounting data generation apparatus according to the embodiment.
FIG. 4 is a diagram (1) illustrating an example of definition information stored in a supplementary item definition storage unit according to the embodiment.
FIG. 5 is a diagram (2) illustrating an example of the definition information stored in the supplementary item definition storage unit according to the embodiment.
FIG. 6 is a diagram illustrating an example of definition information stored in a code conversion definition storage unit according to the embodiment.
FIG. 7 is a diagram illustrating an example of definition information stored in a journal definition storage unit according to the embodiment.
FIG. 8 is a diagram illustrating an example of a filtering process performed by a filtering processing unit according to the embodiment.
FIG. 9 is a diagram illustrating an example of a branch filtering process performed by a branch filtering processing unit according to the embodiment.
FIG. 10 is a diagram illustrating an example of a consolidation process performed by a consolidation processing unit according to the embodiment.
FIG. 11 is a diagram (1) illustrating an example of an allocation process performed by an allocation processing unit according to the embodiment.
FIG. 12 is a diagram (2) illustrating an example of the allocation process performed by the allocation processing unit according to the embodiment.
FIG. 13 is a diagram illustrating an example of a data item conversion process performed by an I/F conversion processing unit according to the embodiment.
FIG. 14 is a diagram illustrating an example of a supplementing process performed by a supplementing processing unit according to the embodiment.
FIG. 15 is a diagram illustrating an example of a code conversion process performed by a code conversion processing unit according to the embodiment.
FIG. 16 is a diagram illustrating an example of a breakdown process performed by a breakdown processing unit according to the embodiment.
FIG. 17 is a diagram illustrating an example of a case where the breakdown processing unit and the supplementing processing unit according to the embodiment are combined.
FIG. 18 is a diagram illustrating an example of a journalizing process performed by a journalizing processing unit according to the embodiment.
FIG. 19 is a diagram illustrating an example of a case where the journalizing process is performed without using the journalizing processing unit according to the embodiment.
FIG. 20 is a flowchart illustrating a processing procedure of an accounting data generation method to be executed by the accounting data generation apparatus according to the embodiment.
FIG. 21 is a diagram (1) illustrating a first example of the journalizing process by the accounting data generation apparatus according to the embodiment.
FIG. 22 is a diagram (2) illustrating the first example of the journalizing process by the accounting data generation apparatus according to the embodiment.
FIG. 23 is a diagram (3) illustrating the first example of the journalizing process by the accounting data generation apparatus according to the embodiment.
FIG. 24 is a diagram (4) illustrating the first example of the journalizing process by the accounting data generation apparatus according to the embodiment.
FIG. 25 is a diagram (1) illustrating a second example of the journalizing process by the accounting data generation apparatus according to the embodiment.
FIG. 26 is a diagram (2) illustrating the second example of the journalizing process by the accounting data generation apparatus according to the embodiment.
FIG. 27 is a diagram (3) illustrating the second example of the journalizing process by the accounting data generation apparatus according to the embodiment.
FIG. 28 is a diagram (4) illustrating the second example of the journalizing process by the accounting data generation apparatus according to the embodiment.
FIG. 29 is a diagram (5) illustrating the second example of the journalizing process by the accounting data generation apparatus according to the embodiment.
FIG. 30 is a diagram (6) illustrating the second example of the journalizing process by the accounting data generation apparatus according to the embodiment.
FIG. 31 is a diagram (7) illustrating the second example of the journalizing process by the accounting data generation apparatus according to the embodiment.
FIG. 32 is a diagram illustrating a computer that executes an accounting data generation program according to the embodiment.
FIG. 33 is a diagram illustrating a configuration of an accounting data generation system according to the embodiment.

### [Embodiments for Carrying Out the Invention]

Hereinafter, an embodiment of an accounting data generation apparatus, method, program, system, server apparatus, and recording medium that are disclosed in the present application will be described in detail based on the drawings. In the embodiment illustrated below, a description will be given taking an example of a case where data on a transaction performed by a business system is set as business data, and journal data where the business data has been journalized is generated as accounting data. However, the embodiment of the accounting data generation apparatus, method, program, system, server apparatus, and recording medium that are disclosed in the present application is not limited to the one described below, but can be similarly applied also to a case where various pieces of accounting data other than the journal data are generated.

### Embodiment

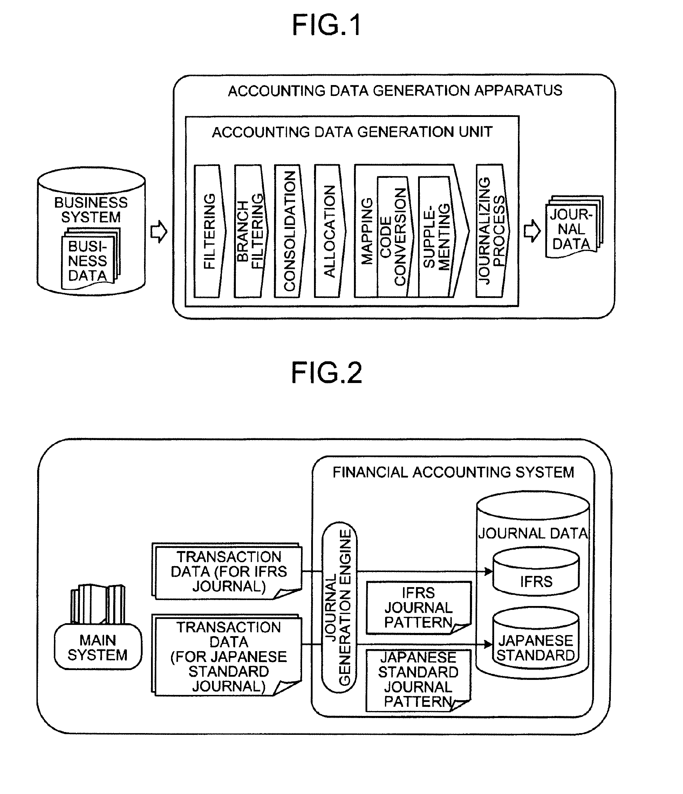

Firstly, an outline of the accounting data generation apparatus according to the embodiment will be described. FIG. 1 is a diagram illustrating an outline of the accounting data generation apparatus according to the embodiment. As illustrated in FIG. 1, the accounting data generation apparatus according to the embodiment acquires, as the business data, data on a transaction input into a business system, and generates, as the accounting data, journal data where the business data has been journalized.

Specifically, in the embodiment, an accounting data generation unit included in the accounting data generation apparatus acquires business data created from the data of the business system. The accounting data generation unit then reads definition information corresponding to the kind of the acquired business data from a definition information storage unit that stores definition information for generating a plurality of pieces of accounting data corresponding respectively to a plurality of accounting standards for each of the business data. The accounting data generation unit then generates a plurality of pieces of accounting data corresponding respectively to the plurality of accounting standards from the business data in accordance with the read definition information.

Moreover, in the embodiment, the accounting data generation unit includes a plurality of modularized data processing units that respectively perform different processes on the business data. Specifically, the accounting data generation unit includes, as the data processing units, a filtering processing unit, a branch filtering processing unit, a consolidation processing unit, an allocation processing unit, a mapping processing unit, and a journalizing processing unit. The mapping processing unit includes a code conversion processing unit, a supplementing processing unit, and the like. The definition information storage unit stores, as definition information, information that defines a combination and execution order of the plurality of processing units for generating a plurality of pieces of accounting data.

Generally, an ordinary company is obligated to announce a balance sheet created in the principle of double-entry bookkeeping stipulated by the Companies Act. Hence, a financial accounting system has a function of creating accounting reports such as a financial statement, a balance sheet, and an income statement, which are used in financial accounting. Double-entry bookkeeping here is a method of bookkeeping performed with a focus on two aspects of a transaction, and a method where all accounting transactions are recorded in both the credit and debit sides using itemized accounts (also called account titles). Determining in which account the transaction is recorded, whether the transaction is recorded as a debit or credit entry, and what is the amount to be recorded is called journalizing.

For example, in a case of a typical financial accounting duty, transaction data is manually journalized on a slip and then the journal data is input into a financial accounting system. Due to this, there are conventionally many financial accounting systems having what is called an automatic journalizing function where transaction data on a transaction performed by a business system is input and an automatic journalizing process is performed based on the input transaction data to secure efficiency, correctness, and quickness of journalizing work. For example, there is a financial accounting system that automatically journalizes the input transaction data based on a preregistered journal pattern.

However, since journalizing is automatically performed based on the journal pattern, it is difficult for such a financial accounting system to generate journal data in compliance with a plurality of accounting standards from the same transaction data. FIG. 2 is a diagram illustrating a problem in the known financial accounting system. As illustrated in FIG. 2, for example, in the known financial accounting system, transaction data is input from a main system and journalizing is automatically performed with a journal generation engine that performs the journalizing process based on the journal pattern.

If the accounting standard (journalizing standard) is different, the journal pattern is different depending on the accounting standard. Therefore, it is difficult to perform the automatic journalizing process concurrently even on transaction data input from the same main system. Hence, conventionally, transaction data is prepared according to the journal pattern and each piece of the transaction data is input into an automatic journalizing engine. For example, in order to generate both journal data in compliance with the Japanese standard and journal data in compliance with the IFRS standard from the same transaction data, their respective journal patterns are used. Therefore, the transaction data for the Japanese standard and the transaction data for the IFRS standard are prepared, and each piece of the transaction data is input into the financial accounting system separately. In this manner, in the known financial accounting system, transaction data is prepared according to the accounting standard and therefore it is difficult to generate journal data in compliance with the plurality of accounting standards from the same transaction data.

In contrast, with the above configuration, the accounting data generation apparatus according to the embodiment generates, from the same business data, a plurality of pieces of accounting data in compliance with the plurality of accounting standards. Therefore, the accounting data generation apparatus according to the embodiment can generate accounting data in compliance with the plurality of accounting standards more easily than the above known financial accounting system. Moreover, the accounting data generation apparatus according to the embodiment generates accounting data in accordance with definition information that defines a combination and execution order of a plurality of data processing units for generating a plurality of pieces of accounting data. Hence, an accounting data generation method can be changed easily by changing a part of the data processing units and changing the combination and execution order of the data processing units. Therefore, for example, even if the content of the accounting standard is changed, the accounting data generation apparatus according to the embodiment can deal with the change easily.

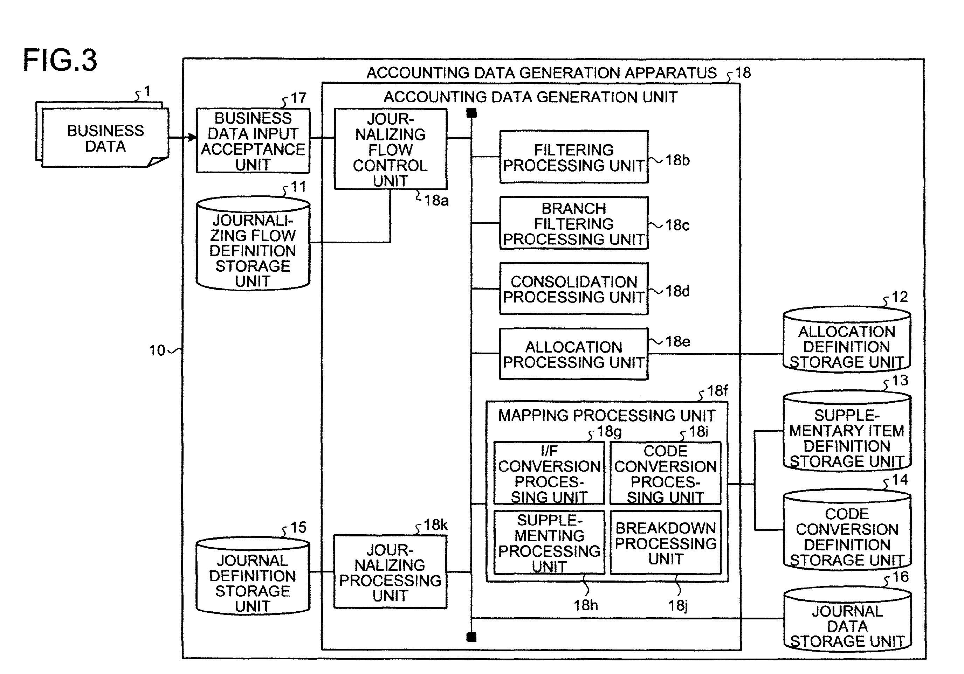

Hereinafter, the accounting data generation apparatus will be described in detail. FIG. 3 is a diagram illustrating a configuration of an accounting data generation apparatus 10 according to the embodiment. As illustrated in FIG. 3, the accounting data generation apparatus 10 includes a journalizing flow definition storage unit 11, an allocation definition storage unit 12, a supplementary item definition storage unit 13, a code conversion definition storage unit 14, a journal definition storage unit 15, a journal data storage unit 16, a business data input acceptance unit 17, and an accounting data generation unit 18.

The journalizing flow definition storage unit 11 stores definition information for generating a plurality of pieces of accounting data corresponding respectively to the plurality of accounting standards, for each kind of business data created from the data of the business system. For example, the journalizing flow definition storage unit 11 stores, as the definition information, information that defines a combination and execution order of the plurality of data processing units for generating a plurality of pieces of accounting data. In the embodiment, the information stored in the journalizing flow definition storage unit 11 is called "journalizing flow definition." Moreover, each of the plurality of data processing units for generating a plurality of pieces of accounting data here is modularized and included in the accounting data generation unit 18 described below.

The allocation definition storage unit 12 stores definition information to break down records of business data into a plurality of records. The definition information stored in the allocation definition storage unit 12 is used by an allocation processing unit 18e described below. For example, the allocation definition storage unit 12 stores definition information to the effect that a record where the "slip segment" is "insurance expenses" is evenly allocated to annual twelve months' records, definition information to the effect that the amount of a record where the "slip segment" is "sales" and the "department name" is "Tokyo Sales Headquarters" is allocated to Tokyo First Sales Department, Tokyo Second Sales Department, and Tokyo Third Sales Department in the ratio of 1 : 2 : 3.

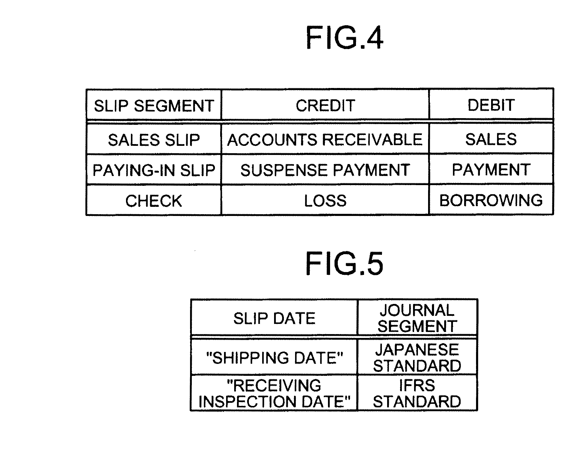

The supplementary item definition storage unit 13 stores definition information for supplementing business data with a data item. The definition information stored in the supplementary item definition storage unit 13 is used by a supplementing processing unit 18h described below. FIGS. 4 and 5 are diagrams illustrating examples of the definition information stored in the supplementary item definition storage unit 13 according to the embodiment. For example, the supplementary item definition storage unit 13 stores definition information for supplementing data items with itemized accounts.

The supplementary item definition storage unit 13 stores credit and debit as the itemized accounts. For example, as illustrated in FIG. 4, the supplementary item definition storage unit 13 stores, as the definition information, information where the "slip segment", the "credit", and the "debit" are associated. The definition information illustrated in FIG. 4 defines that business data is supplemented with the itemized accounts according to the "slip segment" included in the business data.

Specifically, the definition information illustrated in FIG. 4 defines that "accounts receivable" is set in the "credit" and "sales" in the "debit" if the "slip" is a "sales slip." Moreover, the definition information illustrated in FIG. 4 defines that "suspense payment" is set in the "credit" and "payment" in the "debit" if the "slip" is a "paying-in slip," and "loss" is set in the "credit" and "borrowing" in the "debit" if the "slip" is a "check."

Moreover, for example, the supplementary item definition storage unit 13 stores definition information for supplementing business data with a journal segment that identifies each of the plurality of accounting standards as the data item. For example, as illustrated in FIG. 5, the supplementary item definition storage unit 13 stores, as the definition information, information where a "slip date" is associated with the "journal segment". The definition information illustrated in FIG. 5 defines that business data is supplemented with the journal segment in accordance with the "slip date" included in the business data.

Specifically, the definition information illustrated in FIG. 5 defines that the "Japanese standard" is set in the "journal segment" if the "slip date" is a "shipping date," and the "IFRS standard" is set in the "journal segment" if the "slip date" is a "receiving inspection date."

The code conversion definition storage unit 14 stores definition information for converting a code value of a code included in business data to a code value of another code. The definition information stored in the code conversion definition storage unit 14 is used by a code conversion processing unit 18i described below.

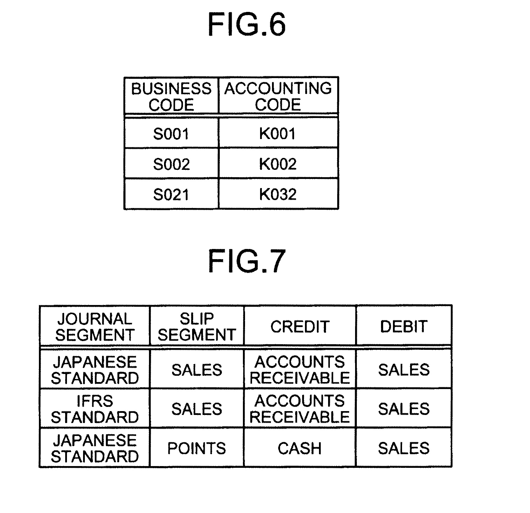

FIG. 6 is a diagram illustrating an example of the definition information stored in the code conversion definition storage unit 14 according to the embodiment. For example, as illustrated in FIG. 6, the code conversion definition storage unit 14 stores, as the definition information, information where a "business code" is associated with an "accounting code." The definition information illustrated in FIG. 6 defines that a code value included in business data is converted into a code value of the accounting code from a code value of the business code.

The journal definition storage unit 15 stores definition information for generating a plurality of pieces of accounting data corresponding respectively to the plurality of accounting standards. In the embodiment, the journal definition storage unit 15 stores the definition information for generating, as the accounting data, a plurality of pieces of journal data where business data has been journalized based on the plurality of accounting standards. The journal definition storage unit 15 is used by a journalizing processing unit 18k described below.

FIG. 7 is a diagram illustrating an example of the definition information stored in the journal definition storage unit 15 according to the embodiment. For example, as illustrated in FIG. 7, the journal definition storage unit 15 stores, as the definition information, information where the "journal segment", the "slip segment", the "credit", and the "debit" are associated. The definition information illustrated in FIG. 7 defines that the "credit" and the "debit" are added to business data in accordance with the "journal segment" and the "slip segment" that are included in the business data.

The journal data storage unit 16 stores accounting data generated by the accounting data generation unit 18. In the embodiment, the journal data storage unit 16 stores, as the accounting data, journal data generated by the accounting data generation unit. The accounting data stored in the journal data storage unit 16 is input, for example, into a report creation function included in the accounting data generation apparatus 10 and another information processing apparatus such as a financial accounting system, and is used to create various accounting reports.

The journalizing flow definition storage unit 11, the allocation definition storage unit 12, the supplementary item definition storage unit 13, the code conversion definition storage unit 14, the journal definition storage unit 15, and the journal data storage unit 16 are, for example, semiconductor memory devices such as a RAM (Random Access Memory), a ROM (Read Only Memory), a flash memory, or storage devices such as a hard disk and an optical disc.

The business data input acceptance unit 17 acquires business data 1 created from the data of the business system. In the embodiment, the business data input acceptance unit 17 acquires data on a transaction as the business data. For example, the business data input acceptance unit 17 receives the business data output from the business system via a network to acquire the business data. Alternatively, the business data input acceptance unit 17 acquires business data by reading the business data from a recording medium such as a DVD (Digital Versatile Disc) or a CD (Compact Disk) where the business data is recorded.

The accounting data generation unit 18 reads from the journalizing flow definition storage unit 11 journalizing flow definitions corresponding to the kind of the business data acquired by the business data input acceptance unit 17, and generates a plurality of pieces of accounting data corresponding respectively to the plurality of accounting standards from the business data in accordance with the read journalizing flow definition. In the embodiment, the accounting data generation unit 18 generates as the accounting data a plurality of pieces of journal data where the business data has been journalized based on the plurality of the accounting standards.

Specifically, the accounting data generation unit 18 includes a journalizing flow control unit 18a. Moreover, the accounting data generation unit 18 includes a plurality of modularized data processing units that respectively perform different processes on the business data. For example, the accounting data generation unit 18 includes, as the data processing units, a filtering processing unit 18b, a branch filtering processing unit 18c, a consolidation processing unit 18d, the allocation processing unit 18e, a mapping processing unit 18f, and the journalizing processing unit 18k.

The journalizing flow control unit 18a reads from the journalizing flow definition storage unit 11 the journalizing flow definitions corresponding to the kind of the business data acquired by the business data input acceptance unit 17, executes each of the data processing units in accordance with the read journalizing flow definition, and accordingly generates a plurality of pieces of accounting data corresponding respectively to the plurality of accounting standards.

Specifically, if the business data input acceptance unit 17 acquires business data, the journalizing flow control unit 18a determines the kind of the acquired business data. The kind of business data here indicates, for example, sales slip data and point sales data. These kinds of business data are identified, for example, by the "slip segment" included in the business data.

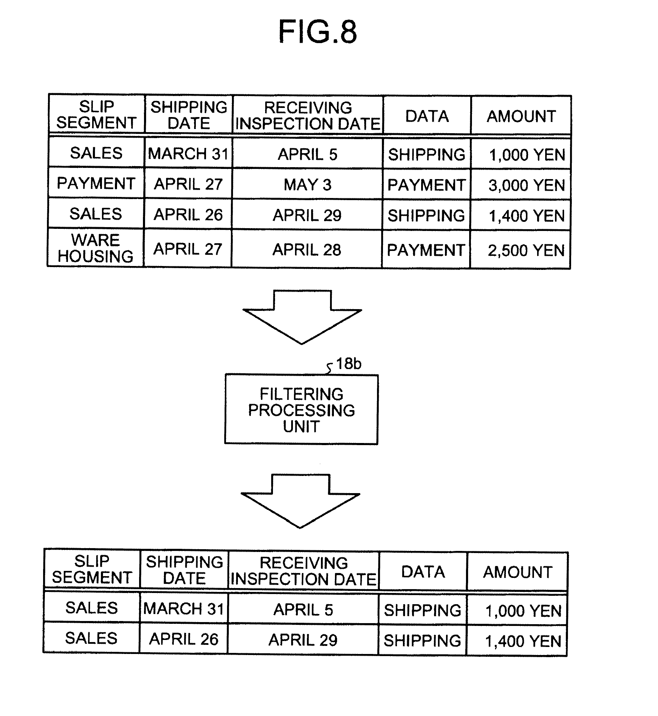

The filtering processing unit 18b performs a filtering process on records of business data based on the journalizing flow definition. FIG. 8 is a diagram illustrating an example of the filtering process performed by the filtering processing unit 18b according to the embodiment. FIG. 8 illustrates here an example of the filtering process when extracting only records where the "slip segment" of the data item is "sales."

For example, assume that it is set as a definition of the filtering process in the journalizing flow definitions that records of the "slip segment" other than "sales" are filtered. In this case, as illustrated in FIG. 8, the filtering processing unit 18b filters records of the "slip segment" other than "sales" from records of a plurality of pieces of business data. In this manner, the filtering processing unit 18b performs the filtering process on the business data and accordingly it is possible to narrow down records to be passed to the data processing unit that is defined by the journalizing flow definition to be executed after the filtering processing unit 18b.

The branch filtering processing unit 18c performs a branch filtering process that controls whether to pass records of business data to the data processing unit to be executed next on a condition on a value set in the data item of the business data and a condition on a numerical value based on the journalizing flow definition. Moreover, if there are two or more data processing units to be executed next, the branch filtering processing unit 18c duplicates the same record to pass the records to the data processing units to be executed next, respectively.

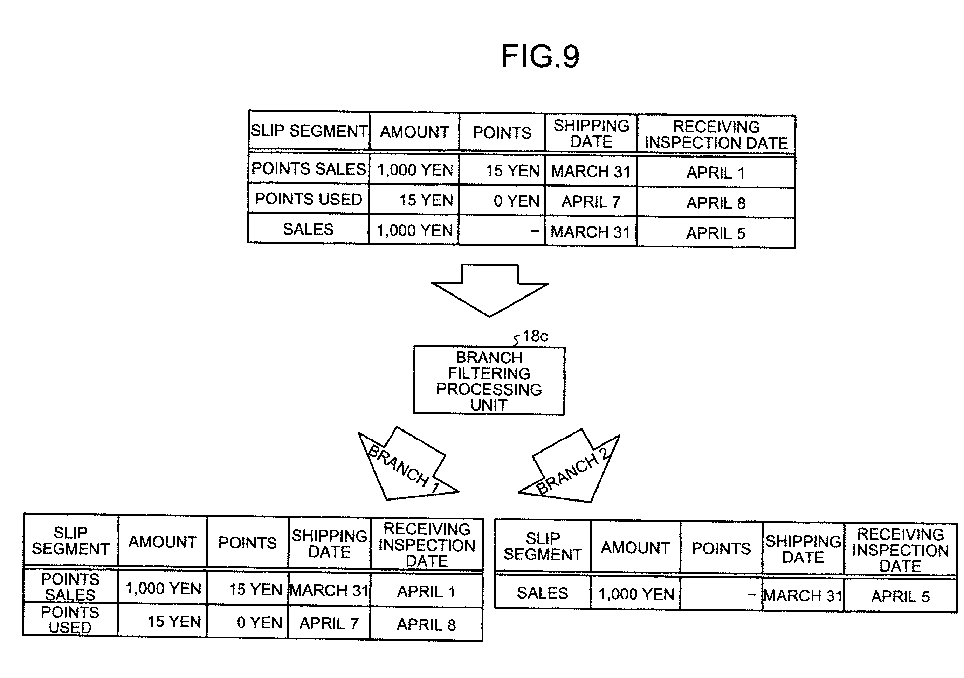

FIG. 9 is a diagram illustrating an example of the branch filtering process performed by the branch filtering processing unit 18c according to the embodiment. FIG. 9 illustrates an example of the branch filtering process when records are branched in accordance with definitions of branch conditions (a branch 1 and a branch 2). For example, assume that it is set as definitions of the branch filtering process in the journalizing flow definitions such that a record where the "slip segment" is "point sales" or "points used," or a record where the amount of "points" is greater than zero is passed to the branch 1, and a record of the "slip segment" other than "point sales" and "points used" is passed to the branch 2.

In this case, as illustrated in FIG. 9, the branch filtering processing unit 18c separates records of a plurality of pieces of business data into records where the "slip segment" is "point sales" or "points used" or records having the amount of "points" greater than zero, and a record where the "slip segment" is "sales." The branch filtering processing unit 18c then passes the records where the "slip segment" is "point sales" or "points used" to the data processing unit of the branch 1, and the record where the "slip segment" is "sales" to the data processing unit of the branch 2.

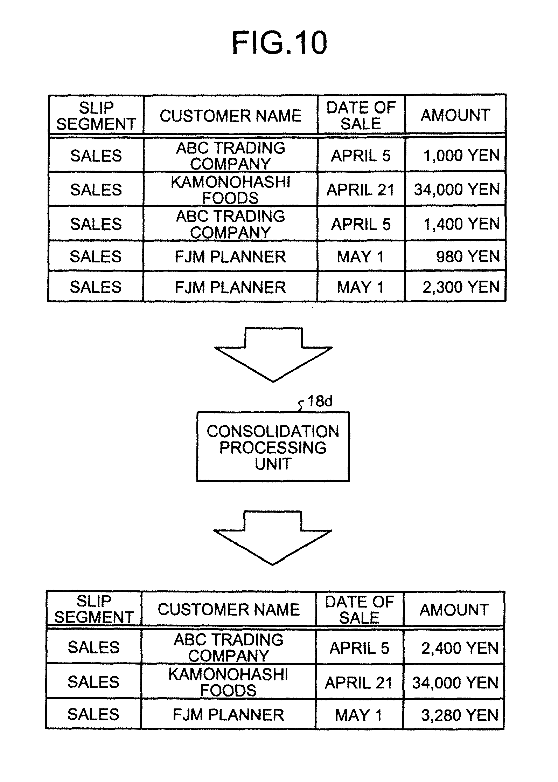

The consolidation processing unit 18d performs a consolidation process that consolidates records of business data on a condition on a value set in the data item of the business data and a condition on a numerical value based on the journalizing flow definitions. FIG. 10 is a diagram illustrating an example of the consolidation process performed by the consolidation processing unit 18d according to the embodiment. FIG. 10 illustrates an example of the consolidation process when records are consolidated according to the slip segment, customer segment, and date of sale, and their amounts are summed.

For example, assume that it is set as a definition of the consolidation process in the journalizing flow definitions such that records that agree with each other in the "slip segment," the "customer name," and the "date of sale" are consolidated, and their amounts are summed. In this case, as illustrated in FIG. 10, the consolidation processing unit 18d consolidates records of a plurality of pieces of business data according to those that agree with each other in the "slip segment," the "customer name," and the "date of sale," respectively, and their amounts are summed.

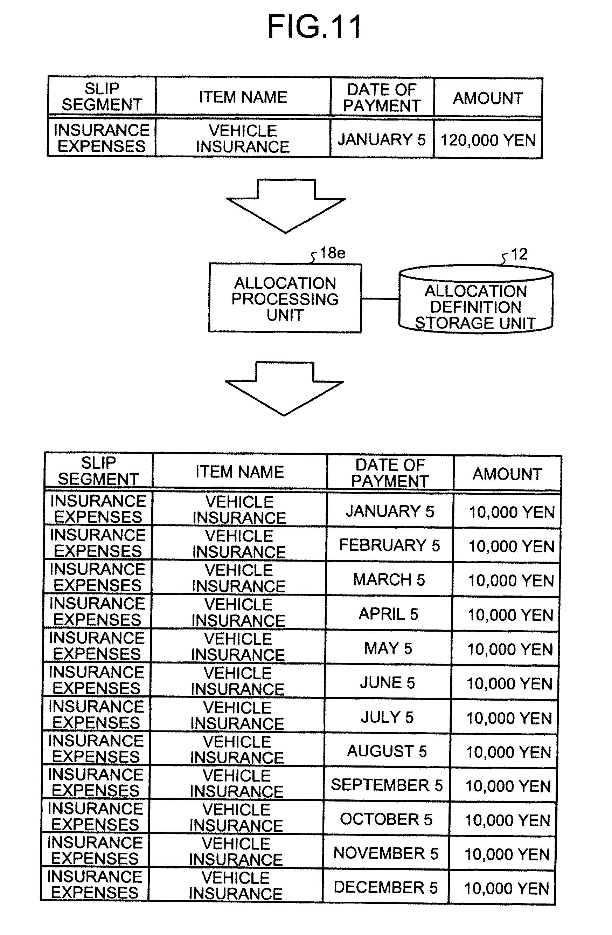

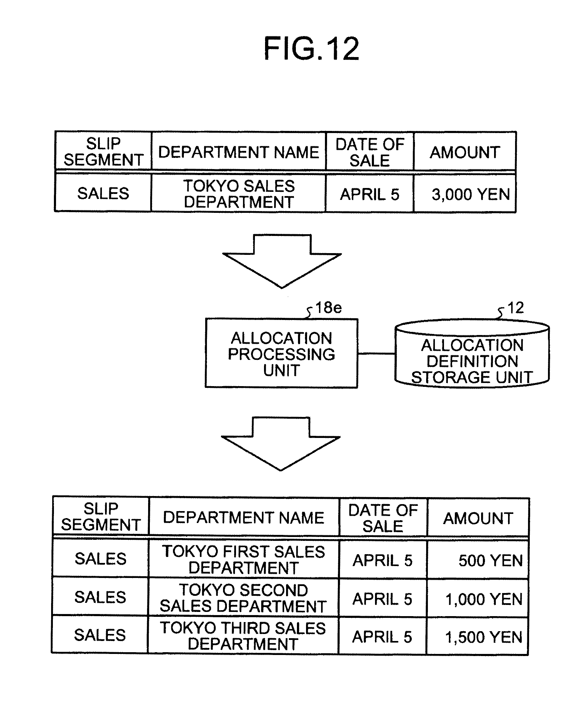

The allocation processing unit 18e performs an allocation process that allocates one record of business data to a plurality of records based on the definition information stored in the allocation definition storage unit 12. FIGS. 11 and 12 are diagrams illustrating examples of the allocation process performed by the allocation processing unit 18e according to the embodiment. FIG. 11 illustrates an example of the allocation process when an annual insurance expense is allocated to monthly insurance expenses. Moreover, FIG. 12 illustrates an example of the allocation process when the sales amount of the headquarters is allocated to the departments.

For example, assume that definition information to the effect that a record where the "slip segment" is "insurance expenses" is evenly allocated to annual 12 months' records is stored in the allocation definition storage unit 12. In this case, as illustrated in FIG. 11, the allocation processing unit 18e duplicates the record where the "slip segment" is "insurance expenses," creates 12 records, sets dates from January to December in each "date of payment," and sets an amount obtained by dividing the amount of the original record by 12 in each "amount." At this point, for example, in terms of the "date of payment," only the months are changed and the days are all set to the same day.

Moreover, for example, assume that definition information to the effect that the amount of a record where the "slip segment" is "sales" and the "department name" is "Tokyo Sales Department" is allocated to Tokyo First Sales Department, Tokyo Second Sales Department, and Tokyo Third Sales Department in the ratio of 1 : 2 : 3 is stored in the allocation definition storage unit 12. In this case, as illustrated in FIG. 12, the allocation processing unit 18e duplicates the record where the "slip segment" is "sales," and creates three records, and sets the "department name" of the first record as "Tokyo First Sales Department," the "department name" of the second record as "Tokyo Second Sales Department," and the "department name" of the third record as "Tokyo Third Sales Department." Moreover, the allocation processing unit 18e calculates three amounts by distributing the amount (3,000 yen) of the original record in the ratio of 1 : 2 : 3, and sets the amount (500 yen) calculated in the ratio of 1 for the record where the "department name" is "Tokyo First Sales Department," the amount (1,000 yen) calculated in the ratio of 2 for the record where the "department name" is "Tokyo Second Sales Department," and the amount (1,500 yen) calculated in the ratio of 3 for the record where the "department name" is "Tokyo Third Sales Department."

The mapping processing unit 18f performs mapping processes such as converting a data item of business data into another data item and replacing the value of a data item with another value. The mapping processing unit 18f includes a plurality of data processing units for performing various mapping processes. The mapping processing unit 18f includes, for example, an I/F conversion processing unit 18g, the supplementing processing unit 18h, the code conversion processing unit 18i, and a breakdown processing unit 18j as the data processing units.

The data processing unit included in the mapping processing unit 18f inputs a single or a plurality of records processed by another data processing unit on a file-by-file basis. Moreover, the data processing unit passes a single or a plurality of records processed by itself to another data processing unit to be executed next on a file-by-file basis. In this manner, the data processing unit exchanges records with another data processing unit on a file-by-file basis and accordingly it becomes possible to arbitrarily change the combination and execution order of the data processing units.

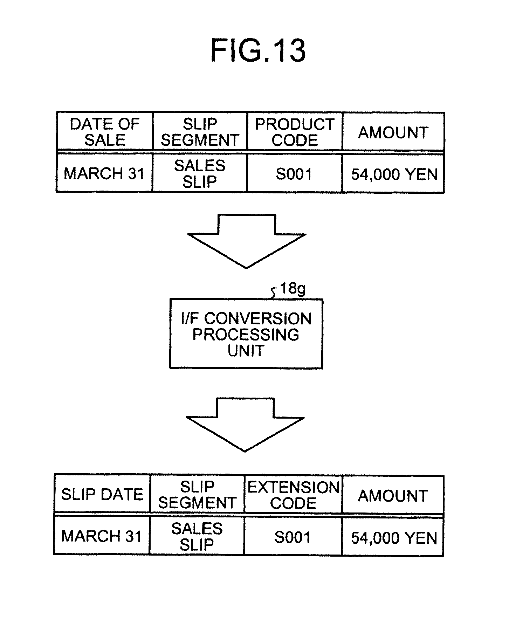

The I/F conversion processing unit 18g performs a data item conversion process that converts a data item of business data into another data item based on the journalizing flow definition. FIG. 13 is a diagram illustrating an example of the data item conversion process performed by the I/F conversion processing unit 18g according to the embodiment. For example, assume that it is set as a definition of the data item conversion process in the journalizing flow definitions that the "date of sale" is converted into the "slip date," and a "product code" into an "extension code." In this case, as illustrated in FIG. 13, the I/F conversion processing unit 18g does not change the set value of the record of the business data but replaces the "date of sale" of the data item with the "slip date," and replaces the "product code" of the data item with the "extension code."

The supplementing processing unit 18h performs a supplementing process that supplements a record of business data with a data item based on the definition information stored in the supplementary item definition storage unit 13. In the embodiment, for example, the supplementing processing unit 18h performs the supplementing process that supplements business data of data items with the journal segment that identifies each of the plurality of accounting standards.

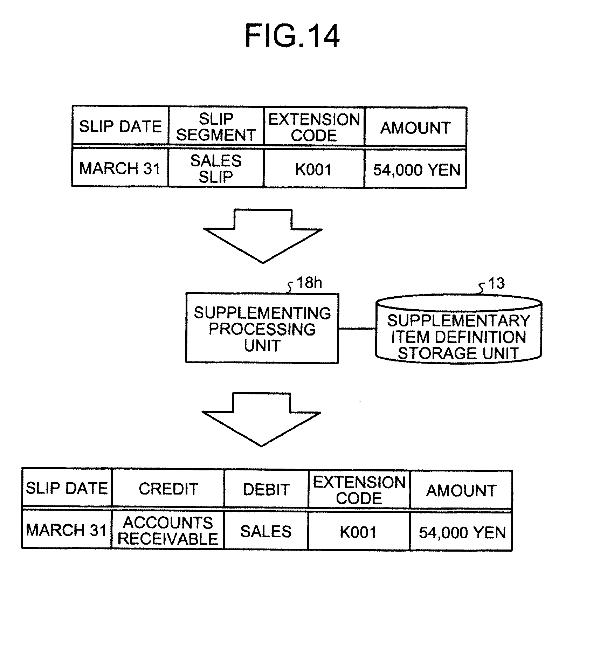

FIG. 14 is a diagram illustrating an example of the supplementing process performed by the supplementing processing unit 18h according to the embodiment. For example, assume that definition information where the slip segment, the credit, and the debit are associated is stored in the supplementary item definition storage unit 13 (refer to FIG. 4). In this case, as illustrated in FIG. 14, the supplementing processing unit 18h supplements the record of the business data with itemized accounts (credit and debit) according to the slip segment included in the record of the business data. Moreover, if definition information where the slip date and the journal segment are associated is stored in the supplementary item definition storage unit 13 (refer to FIG. 5), the supplementing processing unit 18h supplements the record of the business data with the journal segment according to the slip date included in the record of the business data.

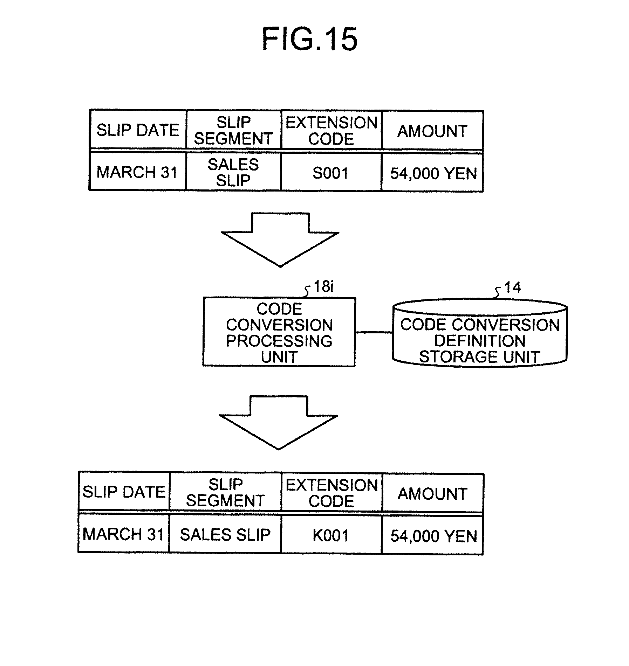

The code conversion processing unit 18i performs a code conversion process that converts a code value of a code included in a record of business data based on the definition information stored in the code conversion definition storage unit 14. FIG. 15 is a diagram illustrating an example of the code conversion process performed by the code conversion processing unit 18i according to the embodiment. For example, assume that definition information where the business code and the accounting code are associated is stored in the code conversion definition storage unit 14 (refer to FIG. 6). In this case, as illustrated in FIG. 15, the code conversion processing unit 18i converts the code value of the "extension code" included in the record of the business data from the code value of the "business code" to the code value of the "accounting code."

The breakdown processing unit 18j performs a breakdown process that breaks down a record of business data based on the journalizing flow definitions. In the embodiment, for example, the breakdown processing unit 18j performs the breakdown process that breaks down business data according to the itemized account in each accounting standard if the itemized account at the time of journalizing a transaction is different between the plurality of accounting standards. Moreover, for example, if a date of occurrence and a date to be processed upon journalizing of a transaction are different between the plurality of accounting standards, the breakdown processing unit 18j performs the breakdown process that breaks down business data according to the date of occurrence and the date to be processed in each accounting standard.

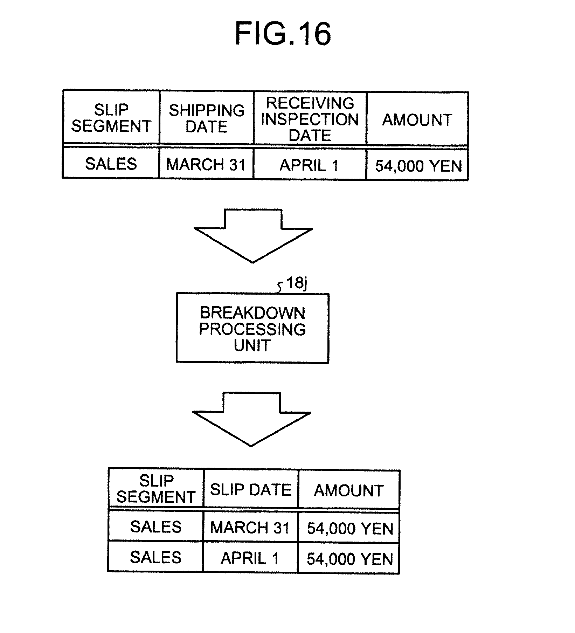

FIG. 16 is a diagram illustrating an example of the breakdown process performed by the breakdown processing unit 18j according to the embodiment. For example, assume that it is set as a definition of the breakdown process in the journalizing flow definitions such that the "shipping date" and the "receiving inspection date" are broken down and mapped onto the "slip date." In this case, as illustrated in FIG. 16, the breakdown processing unit 18j duplicates the record of the business data, creates two records, and replaces the "shipping date" and the "receiving inspection date" of the data items with the "slip date." The breakdown processing unit 18j subsequently sets the date of the "shipping date" of the original record as the set value of the "slip date" for one of the records, and sets the date of the "receiving inspection date" of the original record as the set value of the "slip date" for the other record.

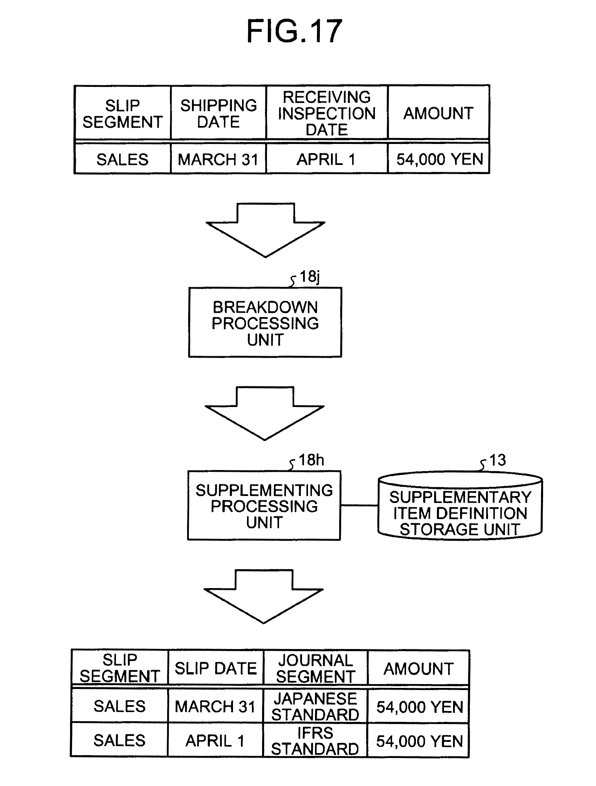

It is also possible to perform the breakdown process and the supplementing process in combination by defining in the journalizing flow definitions that the breakdown processing unit 18j and the supplementing processing unit 18h are combined and executed in order. FIG. 17 is a diagram illustrating an example of a case where the breakdown processing unit 18j and the supplementing processing unit 18h according to the embodiment are combined. For example, assume that it is set as the definition of the breakdown process in the journalizing flow definition such that the "shipping date" and the "receiving inspection date" are broken down and mapped onto the "slip date." Moreover, assume that definition information that defines that the "Japanese standard" is set in the "journal segment" if the "slip date" is the "shipping date," and the "IFRS standard" is set in the "journal segment" if the "slip date" is the "receiving inspection date" is stored in the supplementary item definition storage unit 13 (refer to FIG. 5).

In this case, as illustrated in FIG. 17, firstly the breakdown processing unit 18j performs the breakdown process on the record of the business data, and passes all the records obtained by the breakdown process to the supplementing processing unit 18h. The supplementing processing unit 18h subsequently performs the supplementing process on the records passed from the breakdown processing unit 18j. Consequently, for example, in the example illustrated in FIG. 16, it is possible to obtain the records where the two records obtained by the breakdown process have respectively been supplemented with the "journal segment". At this point, the "journal segment" is supplemented with the "Japanese standard" for the record where the "slip date" is the "shipping date," and the "journal segment" is supplemented with the "IFRS standard" for the record where the "slip date" is the "receiving inspection date."

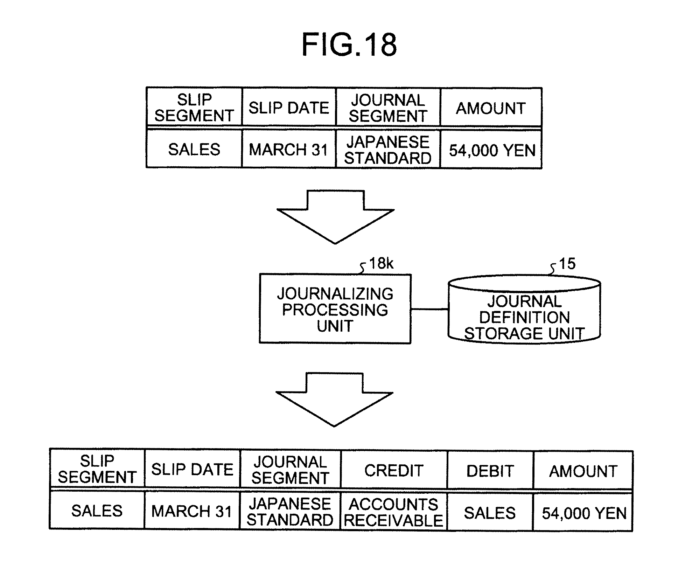

The journalizing processing unit 18k generates a plurality of pieces of accounting data corresponding respectively to the plurality of accounting standards based on the definition information stored in the journal definition storage unit 15. In the embodiment, the journalizing processing unit 18k generates as the accounting data a plurality of pieces of journal data where business data has been journalized based on the plurality of accounting standards. Moreover, the journalizing processing unit 18k saves the generated accounting data in the journal data storage unit 16. FIG. 18 is a diagram illustrating an example of a journalizing process performed by the journalizing processing unit 18k according to the embodiment. For example, assume that definition information where the "journal segment," the "slip segment," the "credit," and the "debit" are associated is stored in the journal definition storage unit 15 (refer to FIG. 7).

In this case, the journalizing processing unit 18k adds the "credit" and the "debit " to the business data according to the "journal segment" and the "slip segment" that are included in the business data. In this manner, the journalizing processing unit 18k sets the "credit" and the "debit" according to the "journal segment" and the "slip segment" and accordingly journalizing is performed in compliance with the plurality of accounting standards. As a consequence, a plurality of pieces of journal data corresponding respectively to the plurality of accounting standards is generated.

The journalizing flow definition defines that the filtering processing unit 18b, the branch filtering processing unit 18c, the consolidation processing unit 18d, the allocation processing unit 18e, and the I/F conversion processing unit 18g, the supplementing processing unit 18h, the code conversion processing unit 18i, and the breakdown processing unit 18j of the mapping processing unit 18f are combined as appropriate and executed in order, and accordingly it is also possible to perform the journalizing process without using the journalizing processing unit 18k.

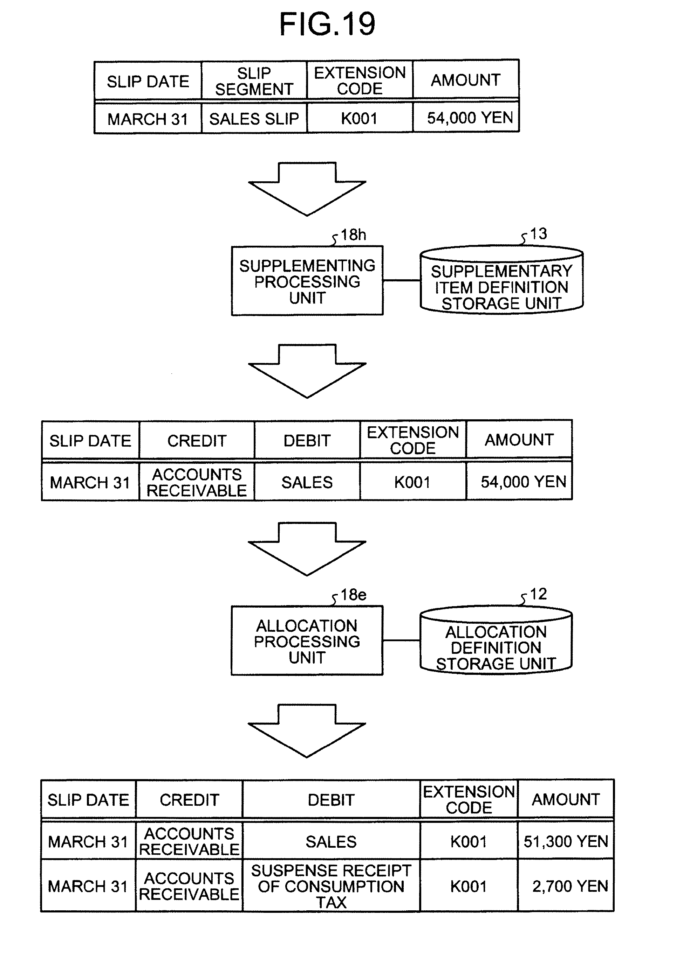

FIG. 19 is a diagram illustrating an example of a case where the journalizing process is performed without using the journalizing processing unit 18k according to the embodiment. FIG. 19 illustrates an example of a case where the supplementing processing unit 18h and the allocation processing unit 18e are combined. For example, as in the example illustrated in FIG. 14, assume that the definition information where the "slip segment," the "credit," and the "debit" are associated is stored in the supplementary item definition storage unit 13 (refer to FIG. 4). Moreover, for example, assume that definition information to the effect that the amount of a record where the "debit" is "sales" is allocated to "sales" and "suspense receipt of consumption tax" in the ratio of 95 : 5 is stored in the allocation definition storage unit 12.

In this case, as illustrated in FIG. 19, firstly, the supplementing processing unit 18h supplements the record of the business data with the itemized accounts (credit and debit) according to the slip segment included in the record of the business data. The supplementing processing unit 18h then passes the record obtained by the supplementing process to the allocation processing unit 18e. The allocation processing unit 18e subsequently duplicates the record where the "debit" is "sales," creates two records, and sets "sales" in the "debit" for one of the records, and "suspense receipt of consumption tax" in the "debit" for the other record. Moreover, the allocation processing unit 18e calculates two amounts by distributing the amount (54,000 yen) of the original record in the ratio of 95 : 5, sets the amount (51,300 yen) calculated in the ratio of 95 in the record where the "debit" is "sales," and the amount (2,700 yen) calculated in the ratio of 5 in the record where the "debit" is "suspense receipt of consumption tax."

In this manner, even if the supplementing processing unit 18h and the allocation processing unit 18e are combined, journal data where the "credit" and the "debit" are set can be generated.

The business data input acceptance unit 17 and the accounting data generation unit 18 are, for example, integrated circuits such as an ASIC (Application Specific Integrated Circuit) and an FPGA (Field Programmable Gate Array), or electronic circuits such as a CPU (Central Processing Unit) and an MPU (Micro Processing Unit).

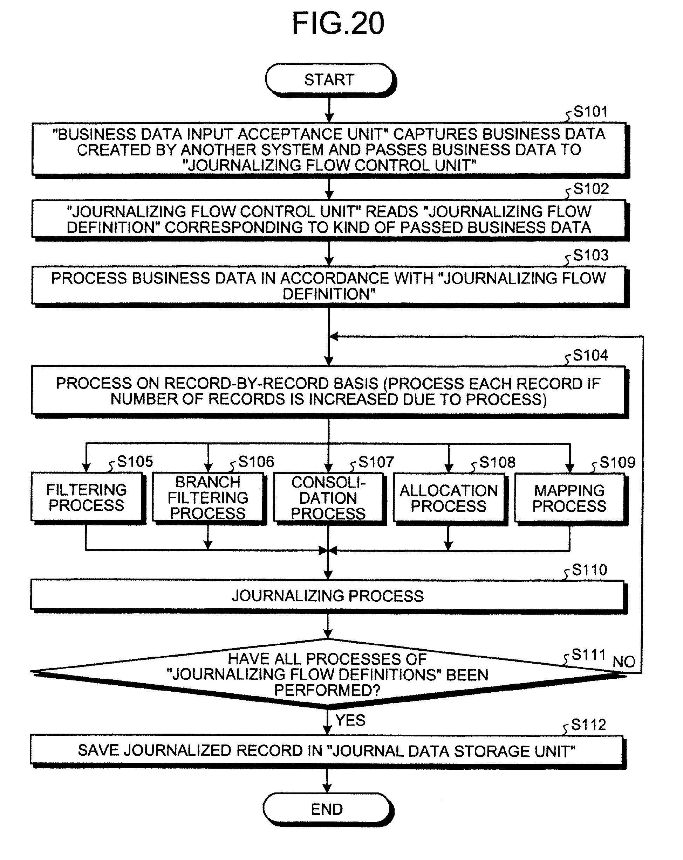

Next, a description will be given of a processing procedure of an accounting data generation method to be executed by the accounting data generation apparatus 10 according to the embodiment. FIG. 20 is a flowchart illustrating the processing procedure of the accounting data generation method to be executed by the accounting data generation apparatus 10 according to the embodiment. As illustrated in FIG. 20, in the accounting data generation apparatus 10, the business data input acceptance unit 17 acquires business data created from data of the business system first.

Specifically, the business data input acceptance unit 17 captures business data created by another system and passes the business data to the journalizing flow control unit 18a (Step S101). Next, the journalizing flow control unit 18a reads from the journalizing flow definition storage unit 11 the journalizing flow definitions corresponding to the kind of the business data passed from the business data input acceptance unit 17 (Step S102).

The journalizing flow control unit 18a then processes the business data in accordance with the read journalizing flow definitions (Step S103). At this point, the journalizing flow control unit 18a executes the plurality of modularized data processing units in accordance with the journalizing flow definitions and accordingly generates a plurality of pieces of accounting data corresponding respectively to the plurality of accounting standards.

Specifically, the journalizing flow control unit 18a processes the business data passed from the business data input acceptance unit 17 on a record-by-record basis (Step S104). In other words, the journalizing flow control unit 18a performs control so as to execute any of the filtering process by the filtering processing unit 18b (Step S105), the branch filtering process by the branch filtering processing unit 18c (Step S106), the consolidation process by the consolidation processing unit 18d (Step S107), the allocation process by the allocation processing unit 18e (Step S108), and the mapping process by the mapping processing unit 18f (Step S109), on the record of the business data in accordance with the journalizing flow definitions. After these processes are performed, the journalizing flow control unit 18a then performs control so as to execute the journalizing process by the journalizing processing unit 18k (Step S110).

At this point, the journalizing flow control unit 18a processes the business data passed from the business data input acceptance unit 17 on a record-by-record basis, but performs control such that the data processing units process the business data in turn in accordance with the journalizing flow definitions in a manner where all the records are processed first by the same data processing unit, and all the records processed by the data processing unit are processed by the next data processing unit. If the number of records is increased due to the processes of the data processing units, the journalizing flow control unit 18a performs control such that the records that have been increased in number are each processed by the next data processing unit.

The journalizing flow control unit 18a determines whether or not all the processes of the journalizing flow definitions have been performed, at the point when the process by one data processing unit is completed (Step S111). If all the processes of the journalizing flow definitions have not been performed (Step S111, No), the journalizing flow control unit 18a returns to Step S104, and performs control so as to cause the next data processing unit to execute the process on the next record. On the other hand, if all the processes of the journalizing flow definitions have been performed (Step S111, Yes), the journalizing flow control unit 18a causes the journal data storage unit 16 to save the record journalized by the journalizing processing unit 18k therein (Step S112), and ends the processing.

In this manner, in the accounting data generation apparatus 10 according to the embodiment, various data processing units execute the processes on business data in accordance with the journalizing flow definitions for generating a plurality of pieces of accounting data based on the plurality of accounting standards and accordingly a plurality of pieces of accounting data corresponding respectively to the plurality of accounting standards is generated.

Next, a description will be given of an example of the journalizing process by the accounting data generation apparatus 10 according to the embodiment. An example of the journalizing process when sales slip data is acquired as the business data will be described here as a fist example. Moreover, the journalizing process when point sales data is acquired as the business data will be described as a second example.

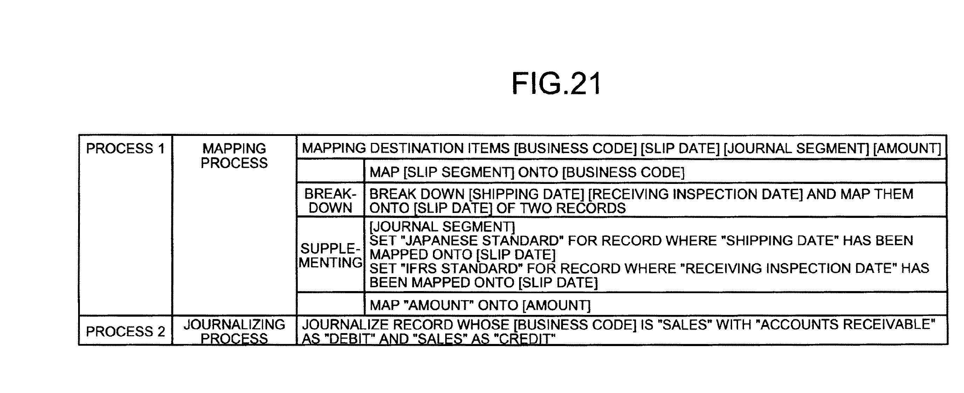

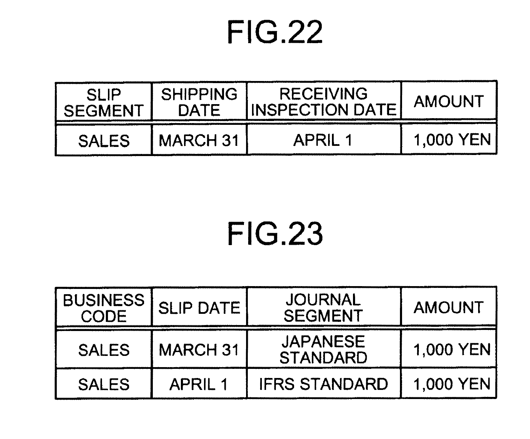

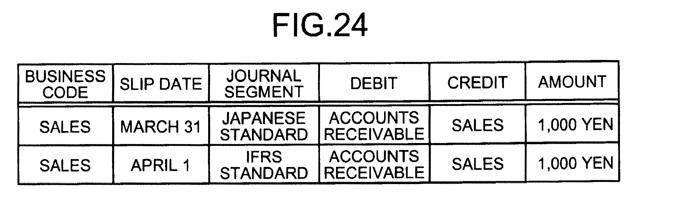

Firstly, the first example will be described. FIGS. 21 to 24 are diagrams illustrating the first example of the journalizing process by the accounting data generation apparatus 10 according to the embodiment. FIG. 21 illustrates the journalizing flow definitions according to the first example. FIG. 22 illustrates sales slip data used as the business data in the first example. Moreover, FIG. 23 illustrates records that can be obtained by the mapping process in the first example. FIG. 24 illustrates records that can be obtained by the journalizing process in the second example.

In the first example, the business data input acceptance unit 17 acquires the sales slip data illustrated in FIG. 22 as the business data, and passes the acquired sales slip data to the journalizing flow control unit 18a. When accepting the sales slip data, the journalizing flow control unit 18a reads the journalizing flow definitions corresponding to the sales slip data from the journalizing flow definition storage unit 11. In the first example, the journalizing flow control unit 18a reads the journalizing flow definitions illustrated in FIG. 21. The journalizing flow control unit 18a then controls the data processing units in accordance with the read journalizing flow definitions.

Firstly, the journalizing flow control unit 18a causes the mapping processing unit 18f to execute the mapping process defined as a "process 1" in the journalizing flow definitions. Specifically, the I/F conversion processing unit 18g of the mapping processing unit 18f creates one record having the "business code," the "slip date," the "journal segment," and the "amount" as the data items. Assuming that the record acquired by the business data input acceptance unit 17 is original data, the I/F conversion processing unit 18g then maps the "slip segment" of the original data onto the "business code" of the created record, and maps the "amount" of the original data onto the "amount."

Next, the breakdown processing unit 18j of the mapping processing unit 18f breaks down the record processed by the mapping processing unit 18f into two, maps the "shipping date" of the original data onto the "slip date" of one of the records, and maps the "receiving inspection date" of the original data onto the "slip date" of the other record. Next, out of the records processed by the breakdown processing unit 18j, the supplementing processing unit 18h of the mapping processing unit 18f supplements the record where the "shipping date" has been mapped onto the "slip date" with the "Japanese standard" in the "journal segment," and supplements the record where the "receiving inspection date" has been mapped onto the "slip date" with the "IFRS standard" in the "journal segment." As a consequence, the two records where the "business code," the "slip date," the "journal segment," and the "amount" have been mapped can be obtained as illustrated in FIG. 23.

The journalizing flow control unit 18a subsequently causes the journalizing processing unit 18k to execute the journalizing process defined as a "process 2" in the journalizing flow definitions. Specifically, the journalizing processing unit 18k performs the journalizing process that adds "accounts receivable" as a "debit" and "sales" as a "credit" to the record where the "business code" is "sales" for each of the two records processed by the mapping processing unit 18f. The journalizing processing unit 18k then saves the journal data generated by the journalizing process in the journal data storage unit 16. As a consequence, as illustrated in FIG. 24, both the record of the journal data in compliance with the Japanese standard and the record of the journal data in compliance with the IFRS standard can be obtained.

As described above, in the first example, the journal data of the plurality of records corresponding respectively to the plurality of accounting standards (the Japanese standard and the IFRS standard) can be obtained from the sales slip data of the one record illustrated in FIG. 22, as illustrated in FIG. 24.

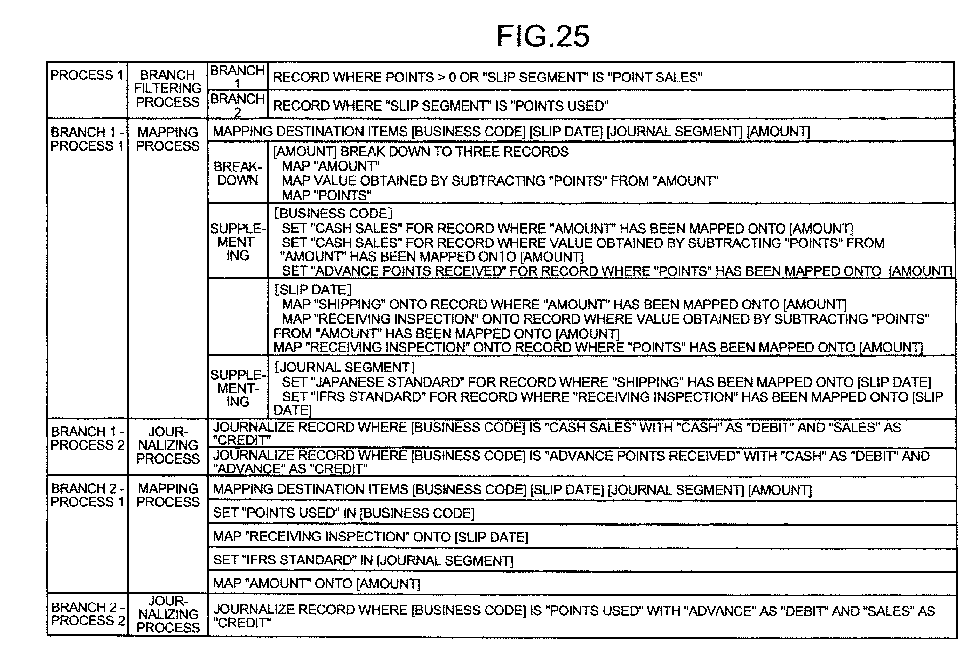

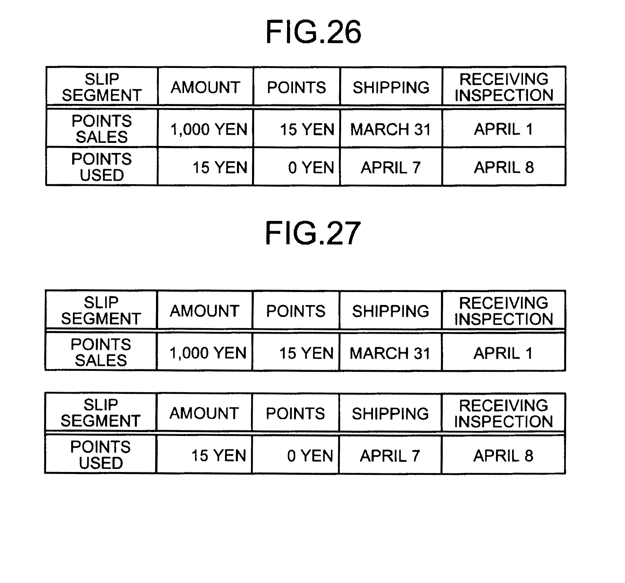

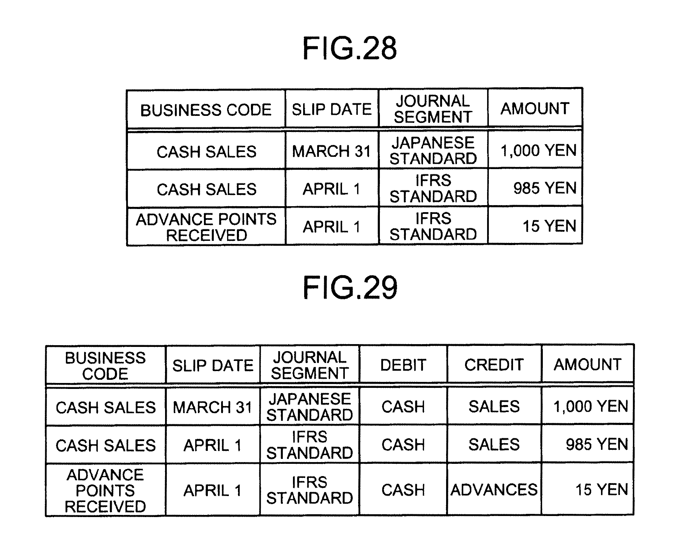

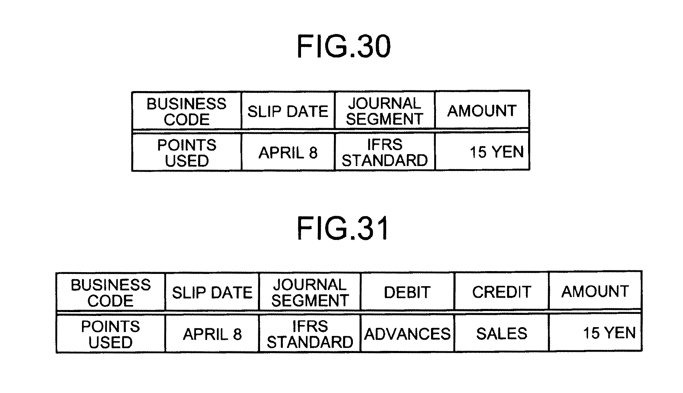

Next, the second example will be described. FIGS. 25 to 31 are diagrams illustrating the second example of the journalizing process by the accounting data generation apparatus 10 according to the embodiment. FIG. 25 illustrates the journalizing flow definitions according to the second example. FIG. 26 illustrates point sales data used as the business data in the second example. Moreover, FIG. 27 illustrates records that can be obtained by the branch filtering process in the second example. Moreover, FIG. 28 illustrates records that can be obtained by the mapping process of a branch 1 in the second example. FIG. 29 illustrates records that can be obtained by the journalizing process of the branch 1 in the second example. Moreover, FIG. 30 illustrates a record that can be obtained by the mapping process of a branch 2 in the second example. FIG. 31 illustrates a record that can be obtained by the journalizing process of the branch 2 in the second example.

In the second example, the business data input acceptance unit 17 acquires the point sales data illustrated in FIG. 26 as the business data, and passes the acquired point sales data to the journalizing flow control unit 18a. When accepting the point sales data, the journalizing flow control unit 18a reads the journalizing flow definitions corresponding to the point sales data from the journalizing flow definition storage unit 11. In the second example, the journalizing flow control unit 18a reads the journalizing flow definitions illustrated in FIG. 25. The journalizing flow control unit 18a then controls the data processing units in accordance with the read journalizing flow definitions.

Firstly, the journalizing flow control unit 18a causes the branch filtering processing unit 18c to execute the branch filtering process defined as a "process 1" in the journalizing flow definitions. Specifically, the branch filtering processing unit 18c branches a record where the amount of points is greater than zero or the "journal segment" is "point sales" to a process of the branch 1, and branches a record where the "journal segment" is "points used" to a process of the branch 2, in accordance with the conditions of the branch filtering process defined in the journal filter definitions. As a consequence, the point sales data illustrated in FIG. 26 is divided into two records as illustrated in FIG. 27.

The journalizing flow control unit 18a then in turn executes the mapping process defined as "branch 1 - process 1" and the journalizing process defined as "branch 1 - process 2" in the journalizing flow definitions for the record branched to the process of the branch 1 (the record where the amount of points is greater than zero or the "slip segment" is "point sales").

Firstly, the journalizing flow control unit 18a causes the mapping processing unit 18f to execute the mapping process defined as "branch 1 - process 1" in the journalizing flow definitions for the record branched to the process of the branch 1. Specifically, the breakdown processing unit 18j of the mapping processing unit 18f creates three records having the "business code," the "slip date," the "journal segment," and the "amount" as the data items. Assuming that the record branched by the branch filtering processing unit 18c to the process of the branch 1 is original data, the breakdown processing unit 18j then maps the "amount" of the original data onto the "amount" of the first record. Next, the breakdown processing unit 18j maps a value obtained by subtracting the "points" from the "amount" of the original data onto the "amount" of the second record, and maps the "points" of the original data onto the "amount" of the third record.

Next, the supplementing processing unit 18h of the mapping processing unit 18f sets "cash sales" in the "business code" of the record where the "amount" has been mapped onto the "amount." Moreover, the supplementing processing unit 18h sets "cash sales" in the "business code" of the record where the value obtained by subtracting the "points" from the "amount" has been mapped onto the "amount." Moreover, the supplementing processing unit 18h sets "advance points received" in the "business code" of the record where the "points" has been mapped onto the "amount."

Next, the I/F conversion processing unit 18g of the mapping processing unit 18f maps "shipping" onto the slip date" of the record where the "amount" has been mapped onto the "amount." Moreover, the I/F conversion processing unit 18g maps "receiving inspection" onto the "slip date" of the record where the value obtained by subtracting the "points" from the "amount" has been mapped onto the "amount." Moreover, the I/F conversion processing unit 18g maps "receiving inspection" onto the "business code" of the record where the "points" has been mapped onto the "amount."

Next, the supplementing processing unit 18h of the mapping processing unit 18f sets the "Japanese standard" in the "journal segment" of the record where "shipping" has been mapped onto the "slip date." Moreover, the supplementing processing unit 18h sets the "IFRS standard" in the "journal segment" of the records where "receiving inspection" has been mapped onto the "slip date." As a consequence, the three records where the "business code," the "slip date," the "journal segment," and the "amount" have been mapped can be obtained as illustrated in FIG. 28.

The journalizing flow control unit 18a subsequently causes the journalizing processing unit 18k to execute the journalizing process defined as "branch 1 - process 2" in the journalizing flow definitions. Specifically, the journalizing processing unit 18k performs the journalizing process that adds "cash" as a "debit" and "sales" as a "credit" to the records where the "business code" is "cash sales" for the records processed by the mapping processing unit 18f. Moreover, the journalizing processing unit 18k performs the journalizing process that adds "cash" as a "debit" and "advances received" as a "credit" to the record where the "business code" is "advance points received." The journalizing processing unit 18k then saves the journal data generated by the journalizing process in the journal data storage unit 16. As a consequence, as illustrated in FIG. 29, the journal data of one record in compliance with the Japanese standard and the journal data of two records in compliance with the IFRS standard can be obtained, respectively.

On the other hand, the journalizing flow control unit 18a in turn executes the mapping process defined as "branch 2 - process 1" and the journalizing process defined as "branch 2 - process 2" in the journalizing flow definitions for the record branched to the process of the branch 2 (the record where the "journal segment" is "points used").

Firstly, the journalizing flow control unit 18a causes the mapping processing unit 18f to execute the mapping process defined as "branch 2 - process 1" in the journalizing flow definitions for the record branched to the process of the branch 2. Specifically, the supplementing processing unit 18h of the mapping processing unit 18f creates one record having the "business code," the "slip date," the "journal segment," and the "amount" as the data items. The supplementing processing unit 18h then sets "points used" in the "business code" of the created record, and sets the "IFRS standard" in the "journal segment."

Assuming that the record branched by the branch filtering processing unit 18c to the process of the branch 2 is original data, the I/F conversion processing unit 18g of the mapping processing unit 18f then maps "receiving inspection" of the original data onto the "slip date" of the record processed by the supplementing processing unit 18h, and maps the "amount" of the original data onto the "amount." As a consequence, one record where the "business code," the "slip date," the "journal segment," and the "amount" have been mapped can be obtained as illustrated in FIG. 30.

The journalizing flow control unit 18a subsequently causes the journalizing processing unit 18k to execute the journalizing process defined as "branch 2 - process 2" in the journalizing flow definitions. Specifically, the journalizing processing unit 18k performs the journalizing process that adds "advances received" as a "debit" and "sales" as a "credit" to the record where the "business code" is "points used" for the records processed by the mapping processing unit 18f. As a consequence, as illustrated in FIG. 31, the journal data of one record in compliance with the IFRS standard can be obtained.

As described above, in the second example, the plurality of pieces of journal data corresponding respectively to the plurality of accounting standards (the Japanese standard and the IFRS standard) can be obtained from the point sales data of the two records illustrated in FIG. 26, as illustrated in FIGS. 29 and 31.

As described above, in the embodiment, the journalizing flow definition storage unit 11 stores the definition information for generating a plurality of pieces of accounting data corresponding respectively to the plurality of accounting standards, for each kind of business data created from the data of the business system. Moreover, the business data input acceptance unit 17 acquires the business data 1 created from the data of the business system. Moreover, the accounting data generation unit 18 reads from the journalizing flow definition storage unit 11 the journalizing flow definitions corresponding to the kind of the business data acquired by the business data input acceptance unit 17, and generates a plurality of pieces of accounting data corresponding respectively to the plurality of accounting standards from the business data in accordance with the read journalizing flow definition. Therefore, the accounting data generation apparatus 10 according to the embodiment generates a plurality of pieces of accounting data in compliance with the plurality of accounting standards from the same business data and, accordingly, the accounting data in compliance with the plurality of accounting standards can be easily generated. Moreover, the processes based on the plurality of accounting standards are performed concurrently and, accordingly, a plurality of pieces of accounting data in compliance with the plurality of accounting standards can be efficiently generated.

Moreover, in the embodiment, the accounting data generation unit 18 includes the plurality of modularized data processing units that respectively perform different processes on business data. Moreover, the journalizing flow definition storage unit 11 stores, as the definition information, the information that defines the combination and execution order of the plurality of data processing units for generating a plurality of pieces of accounting data. Therefore, the accounting data generation apparatus 10 according to the embodiment can change the accounting data generation method easily by changing a part of the data processing units and changing the combination and execution order of the data processing units. Accordingly, for example if the content of the accounting standard is changed, it is possible to deal with the change easily.

Moreover, in the embodiment, the business data input acceptance unit 17 acquires data on a transaction as the business data. Moreover, the accounting data generation unit 18 generates, as the accounting data, a plurality of pieces of journal data where the business data has been journalized based on the plurality of accounting standards. Therefore, the accounting data generation apparatus 10 according to the embodiment can generate journal data easily in compliance with the plurality of accounting standards.

Moreover, in the embodiment, if the itemized account upon journalizing of a transaction is different between the plurality of accounting standards, the accounting data generation unit 18 performs the breakdown process that breaks down business data according to the itemized account in each accounting standard to generate accounting data. Therefore, even if the itemized account is different between the plurality of accounting standards, the accounting data generation apparatus 10 according to the embodiment can generate journal data easily in compliance with the accounting standards.

Moreover, in the embodiment, if a date of occurrence and a date to be processed upon journalizing of a transaction are different between the plurality of the accounting standards, the accounting data generation unit 18 performs the breakdown process that breaks down business data according to the date of occurrence and the date to be processed in each accounting standard to generate accounting data. Therefore, even if the date of occurrence and the date to be processed upon journalizing of a transaction are different between the plurality of accounting standards, the accounting data generation apparatus 10 according to the embodiment can generate journal data easily in compliance with the accounting standards.

Moreover, in the embodiment, the accounting data generation unit 18 performs the supplementing process that supplements business data with the journal segment that identifies each of the plurality of accounting standards, as the data item, to generate accounting data. Therefore, the accounting data generation apparatus 10 according to the embodiment can generate journal data that can easily identify the accounting standard being a reference of journalizing.

Out of the processes described in the embodiment, all or a part of the processes described to be performed automatically can also be performed manually, or all or a part of the processes described to be performed manually can also be performed automatically in the known method. In addition, the processing procedure, control procedure, specific names, and information including various data and parameters, which are illustrated in the above document and drawings, can be arbitrarily changed unless otherwise specified.

Moreover, the illustrated components of the devices are functionally conceptual, and are not necessarily needed to be physically configured as illustrated. In other words, a specific aspect of the distribution/integration of the devices is not limited to the illustrations and all or part thereof can be configured by functional or physical distribution/integration in arbitrary units in accordance with various loads, use patterns, and the like. Furthermore, all or arbitrary part of the process functions performed in the devices can be realized by a CPU and a program to be analyzed and executed by the CPU, or realized as hardware by wired logic.

For example, the accounting data generation method described in the embodiment can also be realized by executing a program prepared in advance on a computer. Hence, a description will be given below of an example of a computer that executes an accounting data generation program that realizes the accounting data generation method described in the embodiment.

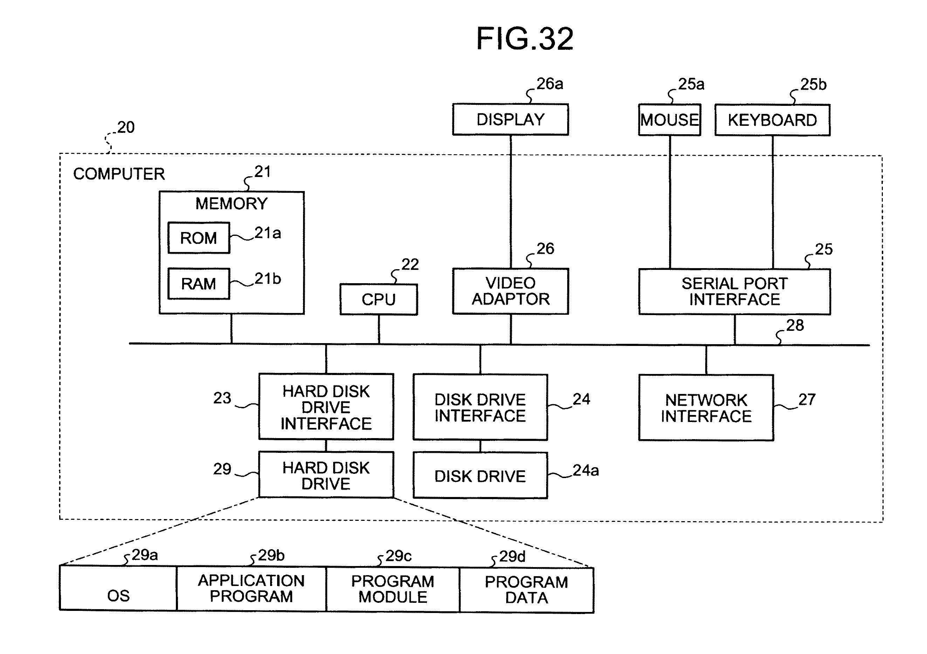

FIG. 32 is a diagram illustrating a computer 20 that executes the accounting data generation program according to the embodiment. As illustrated in FIG. 32, the computer 20 includes, for example, a memory 21, a CPU (Central Processing Unit) 22, a hard disk drive interface 23, a disk drive interface 24, a serial port interface 25, a video adaptor 26, and a network interface 27. These units are connected by a bus 28.

The memory 21 includes a ROM (Read Only Memory) 21a and a RAM (Random Access Memory) 21b. The ROM 21a stores a boot program such as BIOS (Basic Input Output System). The hard disk drive interface 23 is connected to a hard disk drive 29. The disk drive interface 24 is connected to a disk drive 24a. A recording medium that is detachable, such as a magnetic disk or an optical disc, is inserted into the disk drive 24a. For example, a mouse 25a and a keyboard 25b are connected to the serial port interface 25. For example, a display 26a is connected to the video adaptor 26.

As illustrated in FIG. 32, for example, an OS (Operating System) 29a, an application program 29b, a program module 29c, and program data 29d are stored in the hard disk drive 29. The accounting data generation program of the embodiment is recorded, for example, in the hard disk drive 29, for example, as a program module where an instruction to be executed by the computer 20 is described. Specifically, a program module where a business data acquisition procedure for executing similar information processing to the business data input acceptance unit 17 described in the embodiment, and a data reading procedure and an accounting data generation procedure for executing similar information processing to the accounting data generation unit 18 are described is recorded in the hard disk drive 29.

Moreover, similarly to the data stored in the journalizing flow definition storage unit 11 and the like that are described in the embodiment, data used for information processing by the accounting data generation program is stored, for example, in the hard disk drive 29. The CPU 22 reads the program module and the program data, which are stored in the hard disk drive 29, into the RAM 21b as appropriate and executes an information collection procedure and a service determination procedure.

The program module and the program data according to the accounting data generation program are not limited to the case where they are stored in the hard disk drive 29, but may be, for example, stored in a detachable recording medium and read by the CPU 22 via the disk drive 24a and the like. Alternatively, the program module and the program data according to the accounting data generation program may be stored in another computer connected via a network such as LAN (Local Area Network) or WAN (Wide Area Network), and read by the CPU 22 via the network interface 27.

Moreover, the accounting data generation method described in the embodiment can also be applied to a computer system including a client apparatus and a server apparatus that are connected via the network. The computer system here includes, for example, those using a mechanism of cloud computing where the server apparatus provides the client apparatus with a service that uses various computer resources such as software, hardware, and a database via the Internet.

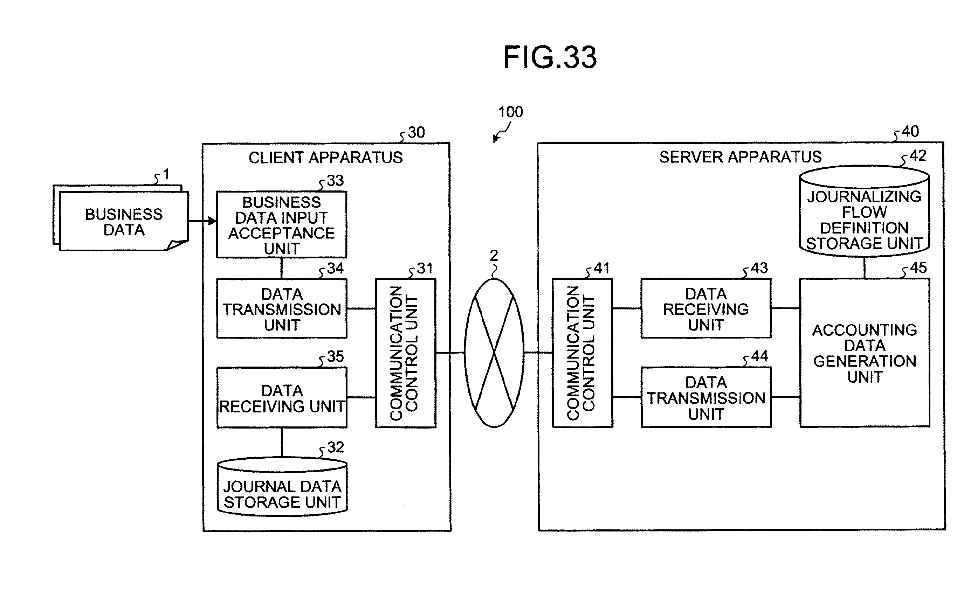

Hereinafter, a description will be given of an example of an accounting data generation system to which the accounting data generation method described in the embodiment is applied. FIG. 33 is a diagram illustrating a configuration of the accounting data generation system according to the embodiment. As illustrated in FIG. 33, an accounting data generation system 100 according to the embodiment includes a client apparatus 30 and a server apparatus 40. The client apparatus 30 and the server apparatus 40 are connected via a network 2.

The client apparatus 30 is a terminal apparatus used by a user of an accounting data generation service provided by the server apparatus 40. The client apparatus 30 includes, for example, a communication control unit 31, a journal data storage unit 32, a business data input acceptance unit 33, a data transmission unit 34, and a data receiving unit 35. The communication control unit 31 controls the transmission and receipt of various pieces of information that are exchanged with the server apparatus 40.

The journal data storage unit 32 stores accounting data transmitted from the server apparatus 40. For example, the journal data storage unit 32 stores journal data transmitted from the server apparatus 40 as the accounting data. The accounting data stored in the journal data storage unit 32 is, for example, input into a report creation function included in the client apparatus 30 or another information processing apparatus such as a financial accounting system, and is used to create various accounting reports.

The business data input acceptance unit 33 acquires the business data 1 created from the data of the business system. For example, the business data input acceptance unit 33 acquires data on a transaction as the business data 1. For example, the business data input acceptance unit 33 receives the business data output from the business system via the network 2 to acquire the business data. Alternatively, the business data input acceptance unit 33 acquires business data by reading the business data from a recording medium such as a DVD (Digital Versatile Disc) or a CD (Compact Disk) where the business data is recorded.

The data transmission unit 34 transmits the business data created from the data of the business system to the server apparatus 40 via the network 2. Specifically, the data transmission unit 34 transmits an accounting data generation request including the business data acquired by the business data input acceptance unit 33 to the server apparatus 40 via the communication control unit 31 in response to an operation by a user of the client apparatus 30.

The data receiving unit 35 receives accounting data transmitted from the server apparatus 40. Specifically, the data receiving unit 35 receives the accounting data transmitted from the server apparatus 40 via the communication control unit 31 in response to the accounting data generation request. When receiving the accounting data from the server apparatus 40, the data receiving unit 35 then saves the received accounting data in the journal data storage unit 32.

The server apparatus 40 provides the accounting data generation service to the user of the client apparatus 30 via the network 2. The server apparatus 40 includes, for example, a communication control unit 41, a journalizing flow definition storage unit 42, a data receiving unit 43, a data transmission unit 44, and an accounting data generation unit 45. The communication control unit 41 controls the transmission and receipt of various pieces of information to be exchanged with the client apparatus 30.

The journalizing flow definition storage unit 42 stores definition information for generating a plurality of pieces of accounting data corresponding respectively to the plurality of accounting standards, for each kind of business data transmitted from the client apparatus 30. The journalizing flow definition storage unit 42 stores similar definition information to the definition information stored in the journalizing flow definition storage unit 11 described in the embodiment.

The data receiving unit 43 receives business data from the client apparatus 30. Specifically, the data receiving unit 43 receives the accounting data generation request transmitted from the client apparatus 30 via the communication control unit 41. When receiving the accounting data generation request, the data receiving unit 43 then passes to the accounting data generation unit 45 the business data included in the received accounting data generation request.

The data transmission unit 44 transmits to the client apparatus 30 accounting data generated by the accounting data generation unit 45. Specifically, when the accounting data generation unit 45 described below generates accounting data, the data transmission unit 44 transmits the generated accounting data to the client apparatus 30 via the communication control unit 41.

The accounting data generation unit 45 reads from the journalizing flow definition storage unit 42 the definition information corresponding to the kind of the business data received by the data receiving unit 43, and generates a plurality of pieces of accounting data corresponding respectively to the plurality of accounting standards from the business data in accordance with the read definition information. For example, the accounting data generation unit 45 generates as the accounting data a plurality of pieces of journal data where the business data has been journalized based on the plurality of accounting standards.

The accounting data generation unit 45 has a similar configuration to the accounting data generation unit 18 described in the embodiment. Specifically, the accounting data generation unit 45 includes similar function units to the journalizing flow control unit 18a, the filtering processing unit 18b, the branch filtering processing unit 18c, the consolidation processing unit 18d, the allocation processing unit 18e, the mapping processing unit 18f, the I/F conversion processing unit 18g, the supplementing processing unit 18h, the code conversion processing unit 18i, the breakdown processing unit 18j, and the journalizing processing unit 18k, which are described in the embodiment.

Although the illustrations are omitted in FIG. 33, the server apparatus 40 includes storage units that store information of similar kinds to the allocation definition storage unit 12, the supplementary item definition storage unit 13, the code conversion definition storage unit 14, and the journal definition storage unit 15, which are described in the embodiment.

In this manner, in the embodiment, the business data input acceptance unit 33 in the client apparatus 30 acquires the business data 1 created from the data of the business system. Moreover, in the server apparatus, the journalizing flow definition storage unit 42 stores definition information for generating a plurality of pieces of accounting data corresponding respectively to the plurality of accounting standards, for each kind of business data transmitted from the client apparatus 30. Moreover, the data receiving unit 43 receives the business data from the client apparatus 30. Moreover, the accounting data generation unit 45 reads from the journalizing flow definition storage unit 42 definition information corresponding to the kind of the business data received by the data receiving unit 43, and generates a plurality of pieces of accounting data corresponding respectively to the plurality of accounting standards from the business data 1 in accordance with the read definition information. Moreover, the data transmission unit 44 transmits to the client apparatus 30 the accounting data generated by the accounting data generation unit 45. Therefore, with the accounting data generation system 100 according to the embodiment, the user of the client apparatus 30 can easily obtain accounting data in compliance with a plurality of accounting standards by transmitting to the server apparatus 40 an accounting data generation request including business data created from the data of the business system.

### [Explanation of Reference]

- 10: Accounting data generation apparatus
- 11: Journalizing flow definition storage unit
- 17: Business data input acceptance unit
- 18: Accounting data generation unit

## Claims

1. An accounting data generation apparatus comprising:
a definition information storage unit that stores definition information for generating a plurality of pieces of accounting data corresponding respectively to a plurality of accounting standards for each kind of business data created from data of a business system;
a business data acquisition unit that acquires the business data; and
an accounting data generation unit that reads from the definition information storage unit definition information corresponding to a kind of the business data acquired by the business data acquisition unit, and generates a plurality of pieces of accounting data corresponding respectively to the plurality of accounting standards from the business data in accordance with the read definition information.

2. The accounting data generation apparatus according to claim 1, wherein
the accounting data generation unit includes a plurality of modularized data processing units that respectively perform different processes on the business data, and
the definition information storage unit stores, as the definition information, information defining a combination and execution order of the plurality of data processing units for generating the plurality of pieces of accounting data.

3. The accounting data generation apparatus according to claim 1 or 2, wherein
the business data acquisition unit acquires data on a transaction as business data, and
the accounting data generation unit generates, as the accounting data, a plurality of pieces of journal data where the business data has been journalized based on the plurality of accounting standards.

4. The accounting data generation apparatus according to claim 3, wherein the accounting data generation unit performs a breakdown process for breaking down the business data according to an itemized account in journalizing of a transaction in each of the plurality of accounting standards so as to generate the accounting data, the itemized account being different between the plurality of accounting standards.

5. The accounting data generation apparatus according to claim 3 or 4, wherein the accounting data generation unit performs a breakdown process for braking down the business data according to a date of occurrence in journalizing of a transaction in each of the plurality of accounting standard so as to generate the accounting data, the date of occurrence being different between the plurality of accounting standards.

6. The accounting data generation apparatus according to claim 4 or 5, wherein the accounting data generation unit performs a supplementing process for supplementing the business data with a journal segment for identifying each of the plurality of accounting standards as a data item so as to generates the accounting data.

7. An accounting data generation method comprising:
acquiring business data created from data of a business system;
reading definition information corresponding to a kind of the acquired business data from a definition information storage unit where definition information for generating a plurality of pieces of accounting data corresponding respectively to a plurality of accounting standards is stored for each kind of the business data; and
generating a plurality of pieces of accounting data corresponding respectively to the plurality of accounting standards from the acquired business data in accordance with the read definition information.

8. An accounting data generation program for causing a computer to execute:
acquiring business data created from data of a business system;
reading definition information corresponding to a kind of the business data acquired by the business data acquisition procedure from a definition information storage unit where definition information for generating a plurality of pieces of accounting data corresponding respectively to a plurality of accounting standards is stored for each kind of the business data; and
generating a plurality of pieces of accounting data corresponding respectively to the plurality of accounting standards from the business data acquired by the business data acquisition procedure in accordance with the definition information read by the data reading procedure.

9. An accounting data generation system comprising a client apparatus and a server apparatus, which are connected via a network, wherein
the client apparatus includes a business data transmission unit that performs the transmission of business data created from data of a business system to the server apparatus via the network, and
the server apparatus includes
a definition information storage unit that stores definition information for generating a plurality of pieces of accounting data corresponding respectively to a plurality of accounting standards for each kind of the business data,
a business data receiving unit that receives the business data from the client apparatus,
an accounting data generation unit that reads from the definition information storage unit definition information corresponding to a kind of the business data received by the business data receiving unit, and generating a plurality of pieces of accounting data corresponding respectively to the plurality of accounting standards from the business data in accordance with the read definition information, and
an accounting data transmission unit that transmits to the client apparatus the accounting data generated by the accounting data generation unit.

10. A server apparatus comprising:
a definition information storage unit that stores definition information for generating a plurality of pieces of accounting data corresponding respectively to a plurality of accounting standards for each kind of business data created from data of a business system;
a business data receiving unit that receives the business data from a client apparatus connected via a network; and
an accounting data generation unit that reads from the definition information storage unit definition information corresponding to a kind of the business data received by the business data receiving unit, and generating a plurality of pieces of accounting data corresponding respectively to the plurality of accounting standards from the business data in accordance with the read definition information.

11. A computer-readable recording medium having stored therein a program for causing a computer to execute:
acquiring business data created from data of a business system;
reading definition information corresponding to a kind of the business data acquired by the business data acquisition procedure from a definition information storage unit where definition information for generating a plurality of pieces of accounting data corresponding respectively to a plurality of accounting standards is stored for each kind of the business data; and
generating a plurality of pieces of accounting data corresponding respectively to the plurality of accounting standards from the business data acquired by the business data acquisition procedure in accordance with the definition information read by the data reading procedure.
